Europäisches Patentamt

European Patent Office

Office européen des brevets

(19)

(11) **EP 0 814 533 A2**

(12) **EUROPÄISCHE PATENTANMELDUNG**

(43) Veröffentlichungstag:
29.12.1997 Patentblatt 1997/52

(51) Int. Cl.⁶: **H01Q 1/24**, H01Q 19/06,
H04B 1/38

(21) Anmeldenummer: 97110081.3

(22) Anmeldetag: 20.06.1997

(84) Benannte Vertragsstaaten:
**AT BE CH DE DK ES FI FR GB GR IE IT LI LU MC
NL PT SE**

(30) Priorität: 21.06.1996 DE 19624745

(71) Anmelder:
**SIBET Gmbh SICAN FORSCHUNGS- UND
ENTWICKLUNGSBETRIEBSGESELLSCHAFT
mbH
30419 Hannover (DE)**

(72) Erfinder: **Daehn, Wilfried, Dr.
29227 Celle (DE)**

(54) **Richtantenne für Mikrowellenfunktelefone**

(57)    Bekannte Antennenformen für diesen Frequenzbereich orientieren sich an den Antennen für die Radar- und Richtfunktechnik. Dabei werden auch Richtantennen verwendet, die aus einem Hohlraumresonator gebildet sind. Der Öffnungswinkel derartiger Richtantennen ist sehr schmal und die Bauform ist im Verhältnis zur Wellenlänge sehr groß.

Die Richtantenne hat einen Hohlraumresonator (2) mit einem geschlitzten, metallischen Hohlleiter (4) und einem Mittelleiter (3). In dem Schlitz des Hohlleiters (4) ist eine Verzögerungslinse (5) angeordnet.
Die Antenne schirmt Funktelefonbenutzer von schädlicher Strahlung ab.

Fig. 1

## Beschreibung

Insbesondere bei tragbaren Funktelefonen verursachen elektromagnetische Strahlungen von der Antenne bio-/magnetische Wechselwirkungen mit dem Benutzer eines Telefons. Im Gegensatz zu Autotelefonen, in denen die Antenne durch die Karosserie vom Benutzer abgeschirmt ist, befindet sich die Antenne bei den üblichen tragbaren Funktelefonen in direkter Nähe zum Gehörgang und dem Gehirn des Benutzers. Durch die elektromagnetische Strahlung tritt eine Resonanz von Wassermolekülen auf, so daß sich die betroffenen Körperteile erwärmen könnten. Dies könnte für den Menschen schädlich sein.

Dieser Effekt tritt verstärkt bei der nächsten Generation von Mobiltelefonen auf. Diese Telefone arbeiten in einem Frequenzbereich von mehr als 5 GHz, insbesondere 7-8 GHz. Bei diesen hohen Frequenzen sind verstärkt biologisch/magnetische Wechselwirkungen zu erwarten.

In der DE-OS 31 18 818 A1 ist eine Mikrowellenrichtantenne mit Linienstrahlern beschrieben. die in zwei Richtungen gezielt abstrahlt. Als Linienstrahler wird dort die Verwendung von Hohlleiterschlitzantennen vorgeschlagen, wobei die Bündelung der Strahlen durch außerhalb des Linienstrahlers befindliche dielektrische Linsen erfolgt. Hierzu ist ein Linienstrahler in der Brennlinie der dielektrischen Linse angeordnet. Die Anordnung bewirkt aufgrund der Bündelung durch die Linse einen schmalen Strahl. Hingegen soll bei Mobilfunktelefonen ein möglichst großer Abstrahlraum erfaßt werden, wobei nur der Kopfbereich des Handy-Benutzers ausgenommen werden soll.

In der DE-OS 31 35 818 A1 ist ein Hohlraumresonator zur Verwendung sowohl als Antenne als auch Sender mit einem geschlitzten Hohlleiter beschrieben. Es wird je nach Frequenz empfohlen, einen Mittelleiter vorzusehen. Die Antenne ist als Sende- / Empfangsantenne und ist damit grundsätzlich für Mobilfunktelefone geeignet.

Eine derartige Schlitzantenne findet sich auch in dem „Taschenbuch der Hochfrequenztechnik" von Meinke, Gundlach, Herausgegeben von K. Lange und K.-H. Löcherer, Band 2, Springer Verlag Berlin/Heidelberg, 1992, Seite N17, Kapitel Die Richtcharakteristik der Antenne weist bei einem Durchmesser von $D = 6 * \lambda$ eine relativ breite Streubreite auf, wobei der gegenüber dem Schlitz liegende Bereich feldfrei ist.

Das Problem der beschriebenen Schlitzantennen liegt darin, daß der Durchmesser und die Schlitzlänge von der Wellenlänge abhängig sind. In dem für Mikrowellenfunktelefone relevanten Frequenzbereich von 7-8 GHz würde der Durchmesser, bei dem die gewünschte Richtcharakteristik auftritt (bei $D = 6 * \lambda$), im Bereich von ca. 26 - 22,5 cm liegen. Dieser Durchmesser ist für Mobilfunktelefone eindeutig zu groß.

Für den Mobilfunkbereich soll der Öffnungswinkel hingegen möglichst groß sein, um eine gute Verbindung zu gewährleisten, die von der Position des Benutzers unabhängig ist. Die Baugröße muß jedoch genügend klein sein, um die ergonomischen Anforderungen an tragbare Funktelefone zu erfüllen. Dies ist bei den herkömmlichen Antennenformen nicht gegeben. Aufgrund des geringen Abstands zwischen der Antenne eines tragbaren Funktelefons und dem Kopf eines Benutzers muß dieser vor der Einwirkung der Nahfelder durch eine Richtwirkung der Antenne geschützt werden.

## Aufgabe

Aufgabe der Erfindung war es daher, eine Richtantenne zur gerichteten Abstrahlung elektromagnetischer Wellen zu schaffen, die vor biologisch/magnetischen Wechselwirkungen im potentiell gefährdeten Kopfbereich schützt und einen zuverlässigen Betrieb der Funktelefone gewährleistet. Die Richtantenne sollte kompakt sein, so daß sie in tragbaren Funktelefonen verwendbar ist. Die Richtantenne sollte daher einen Leitungsresonator haben, der aus einem Innenleiter und einem Außenleiter besteht, der den Innenleiter umgibt. Die Richtantenne wird an einer oder an beiden Stirnseiten des Innenleiters gespiesen.

## Erfindung

Die Aufgabe wird durch die durch die Richtantenne nach Anspruch 1 gelöst.

Es hat sich gezeigt, daß mit einer dielektrischen Linse eine starke Richtwirkung, aber auch eine relativ große Streubreite bewirkt werden kann. Dann tritt der Effekt auf, daß der um 180° von der Hauptstrahlrichtung versetzte Raum im Kopfbereich des Benutzers nahezu feldfrei ist. Die Streubreite kann unter Anwendung des optischen Prinzips durch die Linsenform variiert werden. Eine besondere Bedeutung kommt dabei der Brennweite der Linse zu. Der Richtstrahl kann aufgeweitet werden, wenn die Brennlinie nicht im Zentrum des Hohlraumresonators liegt.

## Zeichnungen

Die Erfindung wird anhand der nachfolgenden Zeichnungen näher erläutert. Es zeigen:

Figur 1: eine schematische Ansicht der Richtantenne im Längsschnitt;

Figur 2: eine schematische Ansicht der Richtantenne im Querschnitt;

Figur 3: eine Darstellung des Strahlengangs der Richtantenne im Querschnitt;

Figur 4: eine Darstellung der Feldstärken in der Umgebung der Antenne;

Figur 5: eine Darstellung der relativen elektrischen Feldstärke im Abstand von einem Meter von der Antenne.

### Ausführungsbeispiel

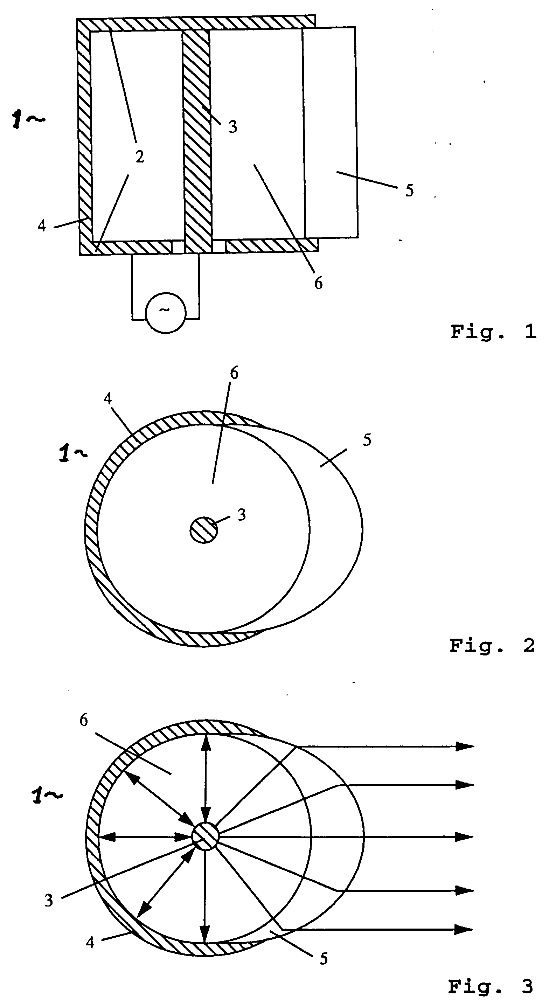

Wie in dem Längsschnitt in Figur 1 gezeigt ist, besteht die Richtantenne 1 im wesentlichen aus einem Leitungsresonator 2 mit einem Innenleiter 3 und einem Außenleiter 4. Der Außenleiter 4 hat obere und untere Stirnflächen und stellt somit einen Resonatorkörper dar. Der Außenleiter 4 ist über einen bestimmten Sektor geöffnet. Damit erlaubt er die Abstrahlung elektromagnetischer Wellen in eine vorgegebene Richtung. In die Öffnung des Außenleiters 4 ist eine Verzögerungslinse 5 eingebracht. Sie bewirkt eine zusätzliche Bündelung der abgestrahlten Wellen. Durch Füllen des Außenleiters 4 bzw. Resonators mit einem Dielektrikum 6, z.B. Keramik oder Kunststoff, kann die Baugröße reduziert werden.

Aus der Figur 2 ist die bevorzugte Ausführung der Richtantenne 1 in koaxialer, runder Form ersichtlich. Die Verzögerungslinse 5 hat an ihrer äußeren Oberfläche eine konkave Form. Die innere Oberfläche der Verzögerungslinse ist kreisförmig, entsprechend dem Umfang des Außenleiters 4 geformt.

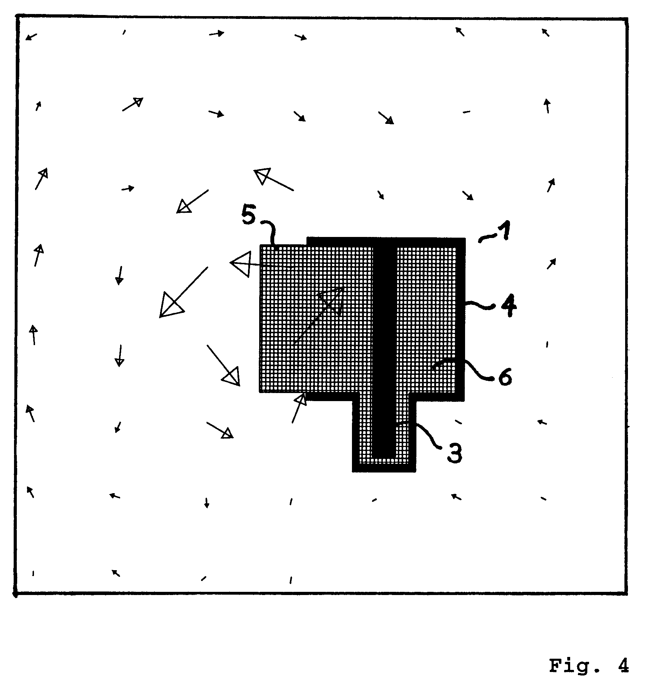

Der Strahlengang der Richtantenne 1 ist in der Figur 3 dargestellt. Während die Wellen im Innenraum des Resonatorkörpers 4 zwischen diesem und dem Innenleiter reflektieren, werden die Wellen, die auf die Öffnung des Außenleiters 4 strahlen, durch die Verzögerungslinse 5 in einen parallelen, gerichteten Strahl gebracht. Der Raum hinter dem Resonatorkörper 4 ist strahlenfrei. Die Antenne müßte daher bei einem tragbaren Funktelefon so ausgerichtet sein, daß sich der Kopf des Benutzers hinter dem Resonatorkörper 4 befindet und die Strahlen durch die Verzögerungslinse 5 von dem Kopf weggerichtet werden.

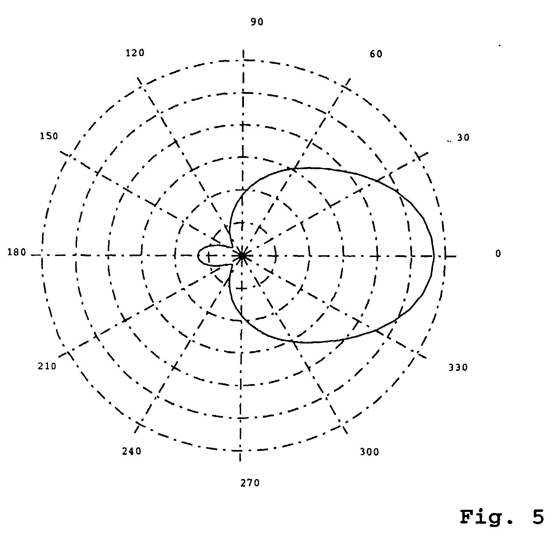

Die Charakteristik der Richtantenne 1 ist aus den Figuren 4 und 5 ersichtlich.

In der Figur 4 ist die Feldstärke in der Umgebung der Antenne gezeigt. Die Antenne ist, ähnlich zur Figur 1, im Längsschnitt dargestellt. Die Feldstärke ist proportional zur Länge der Pfeile. Es ist an den großen Pfeilen erkennbar, daß die Feldstärke im Bereich der Verzögerungslinse 5 am größten ist. Auf der rechten Seite der Darstellung, hinter dem Außenleiter 4 ist die Feldstärke verschwindend gering.

In der Figur 5 ist die relative elektrische Feldstärke im Abstand von einem Meter von der Antenne gezeigt. Als Resonatorhöhe, d.h. die Höhe des Außenleiters 4, wurde für den Frequenzbereich von 7-8 GHz ein Vielfaches der halben Wellenlänge der Wellen im Dielektrikum 6 angenommen. Der Resonatordurchmesser, d.h. der Durchmesser des Außenleiters 4, beträgt ebenfalls ein Vielfaches der halben Wellenlänge der Wellen im Dielektrikum 6. Es ist zu erkennen, daß die Feldstärke im Bereich von 90° bis 270° im Uhrzeigersinn gesehen, relativ groß ist. Auf der anderen Seite der Antenne, im Bereich von 90° bis 270° entgegen dem Uhrzeigersinn gesehen, beträgt die Feldstärke nur das 0,2 -fache der Feldstärke des gegenüberliegenden Bereichs (bei 0°). Die Antenne ist somit geeignet, die schädliche Strahlung im Bereich des Kopfes eines Telefonbenutzers erheblich zu reduzieren.

### Patentansprüche

1. Richtantenne für Mikrowellenfunktelefone (1) in Form eines Hohlraumresonators (2) mit einem geschlitzten, metallischen Hohlleiter (4) und einem Mittelleiter (3),
**dadurch gekennzeichnet, daß**
eine Verzögerungslinse (5) in dem Schlitz des Hohlleiters (4) angeordnet ist.

2. Richtantenne (1) nach Anspruch 1, **dadurch gekennzeichnet,** daß die Verzögerungslinse (5) an ihrer äußeren Oberfläche eine konkave Form hat.

3. Richtantenne (1) nach Anspruch 1, **dadurch gekennzeichnet,** daß die Verzögerungslinse (5) an ihrer äußeren Oberfläche eine konvexe Form hat.

4. Richtantenne (1) nach einem der vorhergehenden Ansprüche, **dadurch gekennzeichnet,** daß die Verzögerungslinse (5) dielektrisch ist.

5. Richtantenne (1) nach einem der vorhergehenden Ansprüche, **gekennzeichnet durch** eine dielektrische Füllung in dem Hohlleiter (4).

1~

2

4

3

6

5

Fig. 1

6

4

1~

5

3

Fig. 2

6

1~

3

4

5

Fig. 3

Fig. 4

Fig. 5